# EUROPÄISCHE PATENTSCHRIFT

(11) **EP 1 278 653 B1**
(45) Veröffentlichungstag und Bekanntmachung des Hinweises auf die Patenterteilung: **14.06.2006**
(21) Anmeldenummer: 01940328.6
(22) Anmeldetag: 14.04.2001
(51) Int. Cl.: B60N 2/20

(54) **FANGHAKEN EINES LEHNENEINSTELLBESCHLAGES FÜR FAHRZEUGSITZE**
CATCH HOOK FOR A BACKREST ADJUSTMENT ARMATURE IN THE SEATS OF MOTOR VEHICLES
CROCHET D'ATTACHE D'UNE ARMATURE DE REGLAGE DU DOSSIER D'UN SIEGE DE VEHICULE

(30) Priorität: 04.05.2000 DE 10021768
(43) Veröffentlichungstag der Anmeldung: 29.01.2003
(73) Patentinhaber: KEIPER GmbH & Co. KG, 67657 Kaiserslautern (DE)
(72) Erfinder: THIEL, Peter, 42899 Remscheid (DE)
(74) Vertreter: Ludewig, Karlheinrich
(86) Internationale Anmeldenummer: PCT/EP2001/004269
(87) Internationale Veröffentlichungsnummer: WO 2001/083258

(56) Entgegenhaltungen:
- DE-A- 4 326 623
- DE-C- 3 828 223
- FR-A- 2 539 603
- GB-A- 2 224 200

## Beschreibung

Die Erfindung betrifft einen gattungsgemäßen Fanghaken eines Lehneneinstellbeschlages für Fahrzeugsitze.

Bei einem aus der gattungsgemäßen DE 43 26 623 C2 bekannten Fanghaken zur lösbaren Verriegelung des zusammen mit einem Sitzteil vorschwenkbaren Beschlagteiles eines Lehneneinstellbeschlages, ist diesem Fanghaken ebenfalls ein klinkenartiger Sperrhaken nebengeordnet, der mit dem Fanghaken über einen Mitnehmer begrenzt ausweichbar verbunden ist und der in Verriegelungsstellung des Fanghakens diesen gegen ein Abgleiten vom am Sitzteil festgelegten Anschlag abstützt. Dabei verspannt einerseits ein am Sperrhaken angreifender Kraftspeicher diesen gegenüber dem Fanghaken, wobei der Sperrhaken am Fanghaken drehbar gehaltert ist und einen Sperrabschnitt aufweist, der sich in Verriegelungslage des Fanghakens an einem am Beschlagteil fest angeordneten Widerlager abstützt. Ferner ist der Lagerzapfen des Fanghakens von einem in Schwenkrichtung des Sperrhakens verlaufenden Langloch im Sperrhaken umgriffen, wobei der Sperrhaken gegenüber dem Fanghaken durch einen weiteren Kraftspeicher verspannt ist. In Gebrauchslage der Rückenlehne besteht somit über den Sperrhaken eine sichere Sperrbereitschaftslage des Fanghakens am Anschlag des Sitzteiles, da der Sperrhaken einerseits über die Achse zwischen Fanghaken und Sperrhaken und andererseits am Widerlager des Beschlagteiles formschlüssig abgestützt ist. Währenddessen stützt sich der Fanghaken einerseits am Lagerzapfen des Beschlagteiles und andererseits mit seinem Mitnehmer am Sperrhaken ab. Somit ist ein Abgleiten des Fanghakens im Augenblick des Crashbeginns verhindert, so dass der Fanghaken in seiner Position verbleibt. Bei dieser Lösung kann jedoch an unbenutzten Sitzen ein Klappergeräusch nicht sicher ausgeschlossen werden.

Die weiterhin vorbekannte Lösung gemäß der Druckschrift DE 38 28 223 C1 offenbart zwar auch einen Fanghaken dem eine Spannklinke nebengeordnet ist, wobei jedoch sowohl der Fanghaken als auch die Spannklinke auf dem gleichen am Beschlagteil angeordneten Lagerbolzen gelagert sind. Sowohl der Fanghaken als auch die Spannklinke umgreifen einen am Sitzuntergestell angeordneten Anschlagzapfen. Während der Fanghaken vorrangig der Sicherung der Verriegelungslage dient, wird durch die Spannklinke zur Spieleliminierung ein Verspannen des Beschlagteiles am Sitzuntergestell erreicht. Dabei sind der Fanghaken und die Spannklinke durch ein Betätigungsmittel beispielsweise in Form eines Seilzuges in einer Weise bewegbar, dass beim Entriegeln des Beschlagteiles zunächst der Fanghaken und erst danach die Spannklinke vom Bolzen weggeschwenkt wird. Aus diesem Grund ist sowohl der Fanghaken als auch der Spannklinke ein separates Federelement zugeordnet, durch welche die Verriegelungslage einerseits des Fanghakens und andererseits der Spannklinke nach dem Zurückklappen der Rückenlehne wiederhergestellt wird. Die gleichzeitige Anordnung von Fanghaken und Spannklinke auf ein und demselben Lagerbolzen erfordert einen bestimmten, eine Keilfläche erzeugenden Verlauf der Spannfläche an der Spannklinke. Infolge der der Lösebewegung des Fanghakens nacheilenden Lösebewegung der Spannklinke kommt es durch die Verklemmung dazu, dass erst nach Betätigungsbeginn des Auslösehebels ein erneuter Kraftanstieg am Auslösehebel überwunden werden muss, so dass der Bedienungskomfort zu wünschen übrig lässt. Außerdem ist auch die Verwendung zweier Rückholfedern dem Bedienungskomfort abträglich, da nämlich nach Überwindung der Federkraft der ersten Rückholfeder nach einer bestimmten Bewegungsphase eine zweite Federkraft ansteht, die den zuvor geschilderten Bedienungseffekt hinsichtlich der aufzuwendenden Betätigungskraft noch verschlechtert.

Aufgabe der Erfindung ist es, neben der Erzeugung einer klapperfreien Verriegelung des Beschlagteiles am Sitzuntergestell insbesondere die Betätigung von Fanghaken und Spannklinke zum Zwecke des Bedienungskomforts zu erleichtern. Diese Aufgabe ist mit den im Kennzeichen des Patentanspruchs 1 genannten Merkmalen gelöst. Denn die anfänglich zur Lösung eingeleitete Betätigungskraft steigt zwar aufgrund der Federkennlinie über den Betätigungsweg noch etwas an, wird jedoch während des Betätigungsweges ab einem bestimmten Punkt, nämlich bei der Mitnahme des Fanghakens durch die Spannklinke nicht sprunghaft erhöht, da der eine Reibkraft erzeugende Effekt durch die Anlage der Spannklinke am Anschlag bereits zu Anfang der Auslösebewegung aufgehoben wurde. Der Fanghaken selbst hintergreift den Anschlag am Sitzuntergestell ohne Keilflächenwirkung; so dass für die Mitnahme des Fanghakens durch die Spannklinke in Löserichtung keine nennenswerte Kraft benötigt wird. Die Auslösekraft wird vorteilhaft über ein insbesondere als Seilzug ausgebildetes Betätigungsglied an einen Auslösezapfen der Spannklinke angelenkt.

Bei einer ersten Ausführungsform sind als Stützglieder neben einem Lagerzapfen zur Lagerung der Spannklinke am Fanghaken, die durch eine Aussparung der Spannklinke gebildeten und den Kopf eines den Fanghaken am Beschlagteil lagernden Bolzens übergreifenden Stützfinger wirksam. Dabei umgreift die Aussparung den Kopf des Bolzens mit Spiel, so dass die Stützfinger einen Abstand zum Umfang des Bolzenkopfes aufweisen. Dadurch ist die Voreilbarkeit der Spannklinke gegenüber dem Fanghaken bei Einleitung der Auslösebewegung gegeben.

Bei einem weiteren Ausführungsbeispiel des Erfindungsgegenstandes fungieren als Stützglieder außer einem Lagerzapfen zur Lagerung der Spannklinke am Fanghaken, auch der Auslösezapfen mit einem Zapfenvorsprung, der in ein Langloch im Fanghaken eingreift, das einen um den Lagerzapfen äquidistant gekrümmten Verlauf aufweist. Dabei ist das Langloch derart angeordnet, dass zunächst über einen kurzen Schwenkweg die Spannklinke frei im vorgenannten Langloch bewegt werden kann, bis schließlich der Zapfenvorsprung an der oberen Begrenzung des Langloches anliegt und dann den Fanghaken mitnimmt.

Die Erfindung ist in Ausführungsbeispielen auf der Zeichnung dargestellt und wird nachfolgend näher erläutert. Es zeigen:
- Fig. 1: einen mit Beschlägen ausgestatteten Fahrzeugsitz in einer schematischen, stark verkleinerten Seitenansicht, wobei die Gebrauchslage der Rückenlehne dargestellt ist,
- Fig. 2: einen auf einer Längsseite des Fahrzeugsitzes angeordneten und mit einem Fanghaken ausgestatteten unteren Beschlagteil eines Lehneneinstellbeschlages in einer gegenüber Fig. 1 vergrößert dargestellten Seitenansicht, wobei sich sowohl Fanghaken und Spannklinke in einer Sperrlage befinden,
- Fig. 3: den aus Fig. 2 ersichtlichen Beschlagteil mit seiner Fanghakenanordnung in einem Längsschnitt nach der Linie III - III von Fig. 2,
- Fig. 4: ein weiteres Ausführungsbeispiel einer Fanghakenanordnung an einem unteren Beschlagteil in einer zu Fig. 2 analogen Darstellung,
- Fig. 5: die aus Fig. 4 ersichtliche Fanghaken- und Sperrklinkenanordnung am unteren Beschlagteil in einem Längsschnitt nach der Linie V - V von Fig. 4.

Zunächst wird darauf hingewiesen, dass bei den dargestellten Ausführungsbeispielen nur die zum Verständnis des Erfindungsgegenstandes erforderlichen Bauteile dargestellt sind, bei denen der Übersichtlichkeit halber stabilisierende Sicken, Ausprägungen und Verbindungsmittel, die nicht zum Verständnis des Erfindungsgegenstandes erforderlich sind, weggelassen wurden.

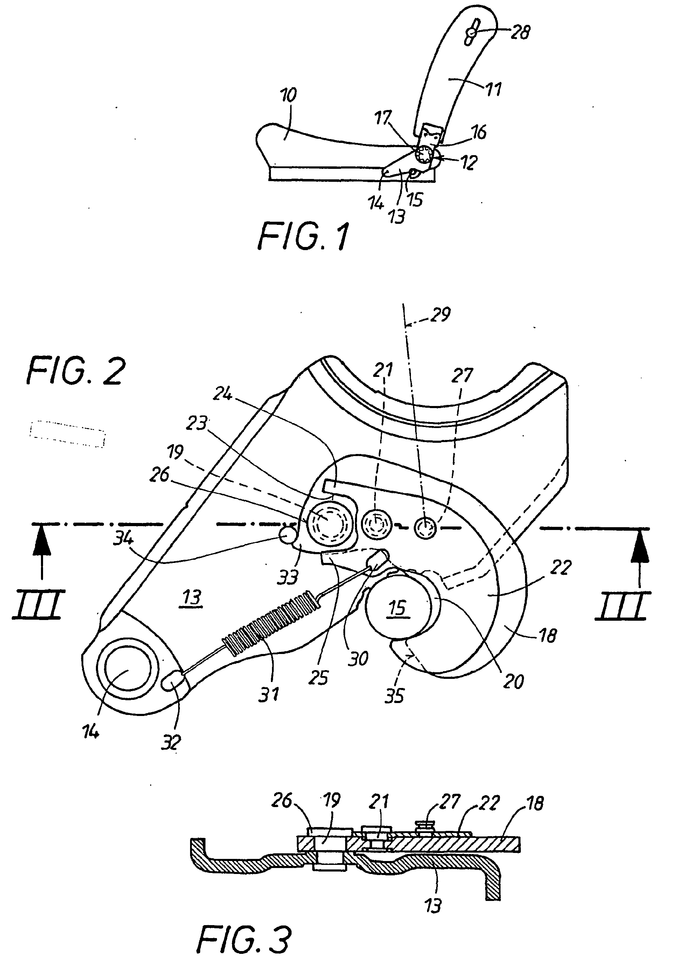

Der in Fig. 1 dargestellte Fahrzeugsitz umfasst einen Sitzteil 10 und eine Rückenlehne 11. Auf beiden Längsseiten des Fahrzeugsitzes ist zwischen dem Sitzteil 10 und der Rückenlehne 11 jeweils ein Lehneneinstellbeschlag 12 angeordnet, dessen dem Sitzteil 10 zugeordneter unterer Beschlagteil 13 drehgelenkig auf einem am Untergestell des Sitzteiles 10 befestigten Zapfen 14 angeordnet ist. In Gebrauchslage der Rückenlehne 11 stützt sich der untere Beschlagteil 13 auf einem ebenfalls am Untergestell des Sitzteiles 10 festgelegten zapfenartigen Anschlag 15 ab. Ein oberer Beschlagteil 16 ist mit der Rückenlehne 11 fest verbunden und steht über eine Ver- und Feststelleinrichtung 17 in Verbindung mit dem unteren Beschlagteil 13.

Damit den Benutzern zweitüriger Personenkraftwagen der Zugang zum Fond des Fahrzeuges erleichtert wird, lässt sich die Rückenlehne 11 über den Sitzteil 10 nach vorn schwenken, wobei während der Verschwenkung der Rückenlehne 11 gegenüber dem Sitzteil 10 zweckmäßigerweise die zwischen dem Beschlagteil 13 und dem Beschlagteil 16 eingestellte Verbindungslage aufrechterhalten wird, so dass die vor dem Verschwenken der Rückenlehne 11 vorhandene Neigungslage dieser Rückenlehne gegenüber dem Sitzteil auch dann wieder vorhanden ist, wenn die Rückenlehne in ihre Gebrauchslage zurückgeschwenkt wird. Damit ist eine erneute Einstellung der Neigungslage der Rückenlehne über die Ver- und Feststelleinrichtung entbehrlich. Zusammen mit der Rückenlehne 1 werden auch die beiderseits des Fahrzeugsitzes angeordneten Lehneneinstellbeschläge um die Zapfen 14 mit nach vorn geschwenkt, da die Beschlagteile 13 und 16 über die Ver- und Feststelleinrichtung eine starre Einheit bilden.

In Gebrauchsstellung der Rückenlehne liegt der untere Rand des Beschlagteiles 13 gegen den sitzteilfesten Anschlag 15 an, der beispielsweise von einem einen Kreisquerschnitt aufweisenden Zapfen- oder Rohrabschnitt gebildet sein kann. Um die Rückenlehne 11 gegen unbeabsichtigtes Vorschwenken zu sichern, ist am unteren Beschlagteil 13 ein Fanghaken 18 auf einem beschlagteilfesten Lagerzapfen 19 schwenkbar gelagert und hintergreift mit seinem Hakenmaul 20 den Anschlag 15 an seinem der Auflagezone des Beschlagteiles 13 gegenüberliegenden Umfangsbereich. Der Lagerzapfen 19 ist am unteren Beschlagteil 13 derart festgelegt, dass er in Fahrtrichtung gesehen in Bezug auf den Anschlag 15 etwas über diesem, jedoch nach vorn versetzt, angeordnet ist. In etwa gleicher Horizontalebene mit geringem Abstand zum Lagerzapfen 19 nach hinten versetzt, ragt aus dem Fanghaken 18 seitlich auf der dem Beschlagteil 13 abgekehrten Seite ein Lagerbolzen 21 aus, auf dem eine dem Fanghaken 18 nebengeordnete Spannklinke 22 auch gegenüber dem Fanghaken 18 schwenkbar gelagert ist. Diese Spannklinke 22 ist ebenfalls hakenförmig gestaltet, weist jedoch bei dem aus Fig. 2 ersichtlichen Ausführungsbeispiel an ihrem in Fahrtrichtung weisenden Ende eine Aussparung 23 auf, durch welche Stützfinger 24 und 25 gebildet werden, die den Kopf 26 des Lagerzapfens 19 mit Spiel auf dessen Ober- und Unterseite übergreifen. Auf etwa der gleichen Horizontalebene, auf der Lagerzapfen 19 und Lagerbolzen 21 angeordnet sind, ist auch geringfügig gegenüber dem Anschlag 15 nach hinten versetzt an der Spannklinke 22 ein aus dieser vorragender Auslösezapfen 27 festgelegt. Dieser Auslösezapfen 27 dient der Verbindung mit einem beispielsweise im oberen Bereich der Rückenlehne angeordneten Betätigungsglied 28. Die Verbindung zwischen dem Betätigungsglied 28 und dem Auslösezapfen 27 lässt sich in bekannter Weise über ein beispielsweise als Bowdenzug ausgebildetes Zugglied 29 herstellen. Zur Aufrechterhaltung der aus Fig. 2 ersichtlichen Sperrlage von Fanghaken 18 und insbesondere auch der Spannklinke 22, weist diese Spannklinke 22 unterhalb ihrer Lagerstelle am Lagerbolzen 21 eine Ausnehmung 30 auf, in welche ein beispielsweise als Zugfeder ausgebildeter Kraftspeicher 31 eingehängt ist, der mit seinem anderen Ende an einem beispielsweise als Einhängeloch 32 ausgebildeten Widerlager am Beschlagteil 13 festgelegt ist. An seinem den Lagerzapfen 19 überragenden Endbereich ist der Fanghaken 18 mit einer Nase 33 versehen, die im Zusammenwirken mit einer Anschlagwarze 34 des unteren Beschlagteiles 13 verhindert, dass der Fanghaken 18 bei vorgeklappter Rückenlehne 11 und gelöstem Betätigungsglied 28 , infolge Schwerkraftwirkung so weit verschwenkt, dass beim Zurückklappen der Rückenlehne der Fanghaken 18 den Anschlag 15 nicht überfahren kann. Dadurch ist sichergestellt, dass beim Zurückschwenken der Rückenlehne 11 aus ihrer vorgeklappten Lage die vordere Schrägfläche 35 am Hakenmaul 20 bei ihrem Auftreffen auf dem Anschlag 15 zurückgleiten kann, weil die Nase 33 in Verbindung mit der Anschlagwarze 34 den Fanghaken 18 in der Bereitschaftslage zum Überfahren des Anschlages 15 hält.

Wenn nun ausgehend von der aus Fig. 2 ersichtlichen Verriegelungslage über das Betätigungsglied 28 und das Zugglied 29 zunächst nur die Spannklinke 22 entgegen dem Uhrzeigerdrehsinn um den Lagerbolzen 21 verschwenkt wird, so trifft der Stützfinger 24 auf den Kopf 26 des Lagerzapfens 19, ohne dass bisher der Fanghaken 18 selbst verschwenkt wurde. Erst wenn der Stützfinger 24 am Kopf 26 des Lagerzapfens 19 anliegt, wird bei weiterer Schwenkbewegung der Spannklinke 22 entgegen dem Uhrzeigersinn über den Lagerbolzen 21 auch der Fanghaken 18 entgegen dem Uhrzeigersinn mit verschwenkt und kommt somit mit seinem Hakenmaul 20 vom Anschlag 15 frei, so dass ein Nachvornschwenken der Rückenlehne 11 möglich ist. Der Stützfinger 24 bildet im Verbund mit dem Kopf 26 des Lagerzapfens 19 Stützglieder, die ein Voreilen der Spannklinke 22 gegenüber dem Fanghaken 18 ermöglichen.

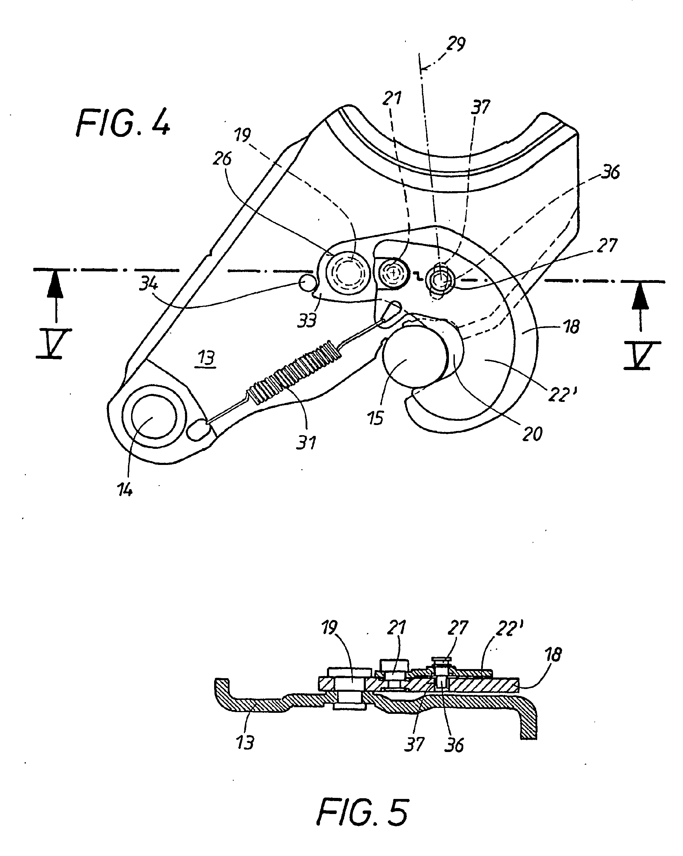

Das aus den Fig. 4 und 5 ersichtliche Ausführungsbeispiel entspricht im wesentlichen demjenigen, das aus den Fig. 2 und 3 ersichtlich ist. Im Unterschied dazu ist jedoch bei dem aus Fig. 4 ersichtlichen Ausführungsbeispiel die Spannklinke 22' verkürzt und weist keine den Kopf 26 des Lagerzapfens 19 übergreifende Aussparung auf. Stattdessen greift der Auslösezapfen 27 mit einem Zapfenvorsprung 36 in ein Langloch 37 im Fanghaken 18 ein. Das Langloch 37 ist in äquidistantem Abstand um den Lagerbolzen 21 - auf dem die Spannklinke 22' am Fanghaken 18 gelagert ist - gekrümmt.

Wenn nun ausgehend von der aus Fig. 4 ersichtlichen Verriegelungslage über das Zugglied 29 und den Auslösezapfen 27 die Spannklinke 22' entgegen dem Uhrzeigersinn um den Lagerbolzen 21 nach oben verschwenkt wird, so verbleibt zunächst der Fanghaken 18 in der dargestellten Lage - und zwar solange - bis der Zapfenvorsprung 26 an der oberen Begrenzung des Langlochs 27 anliegt. Erst danach erfolgt bei weiterem Angriff einer Zugkraft am Auslösezapfen 27 eine Mitnahme des Fanghakens 18 im Öffnungssinne entgegen dem Uhrzeigerdrehsinn, so dass auch dieser Fanghaken vom Anschlag 15 freischwenkt und die Rückenlehne nach vorn geklappt werden kann. Sobald nun infolge Loslassens des Betätigungsgliedes 28 auch das Zugglied 29 kraftlos wird, erfolgt infolge des zuvor gespannten Kraftspeichers 31 eine Rückschwenkung von Spannklinke 22' und damit auch des Fanghakens 18, der jedoch infolge seiner Nase 33 und der Anschlagwarze 34 nicht über einen bestimmten Betrag im Uhrzeigerdrehsinn zurückschwenken kann und in dieser Lage gehalten wird, so dass seine Anlagefläche am Hakenmaul 20 beim Zurückklappen der Rückenlehne 11 den Anschlag 15 überfahren und schließlich hinterfassen kann.

In beiden Fällen dient der Fanghaken 18 der Lastaufnahme im Crashfall, während die Spannklinke 22 bzw. 22' dem klapperfreien Formschluss von Beschlagteil 13 einerseits und der Spannklinke 22 bzw. 22' andererseits am Anschlag 15 dient.

### Bezugszeichenliste :

- 10: Sitzteil
- 11: Rückenlehne
- 12: Lehneneinstellbeschlag
- 13: Beschlagteil, unterer
- 14: Zapfen
- 15 5: Anschlag
- 16: Beschlagteil, oberer
- 17: Ver- und Feststelleinrichtung
- 18 8: Fanghaken
- 19: Lagerzapfen, an 13
- 20: Hakenmaul, von 18
- 21: Lagerbolzen
- 22: Spannklinke
- 22': Spannklinke
- 23: Aussparung
- 24: Stützfinger
- 25: Stützfinger
- 26: Kopf, an 19
- 27: Auslösezapfen
- 28: Betätigungsglied
- 29: Zugglied
- 30: Ausnehmung
- 31: Kraftspeicher, Zugfeder
- 32: Einhängeloch
- 33: Nase
- 34: Anschlagwarze
- 35: Schrägfläche, an 18
- 36: Zapfenvorsprung
- 37: Langloch

## Patentansprüche

1. Fanghaken eines Lehneneinstellbeschlages für Fahrzeugsitze, der zur lösbaren Verriegelung des zusammen mit einem Sitzteil vorschwenkbaren, und in Sperrlage an einem Anschlag (15) eines Sitzuntergestells anliegenden Beschlagteiles (13), an diesem Beschlagteil (13) drehgelenkig gehaltert und im Sperrsinne mittels eines Kraftspeichers beaufschlagt ist, und der Fanghaken (18) in der Sperrlage den Anschlag (15) mit seinem Hakenmaul (20) hintergreift, wobei dem Fanghaken (18) eine den Anschlag (15) bei Sperrlage ebenfalls hintergreifende Spannklinke (22, 22') nebengeordnet ist, die ihrerseits am Fanghaken (18) selbst schwenkbar gelagert und bedarfsweise aus der Sperrlage mittels eines Betätigungsgliedes (28) lösbar ist und die Spannklinke (22, 22') mit dem Fanghaken (18) über Stützglieder (24, 26; 36, 37) in Bewegungsrichtung voreilbar gekuppelt ist,
**dadurch gekennzeichnet , dass**
allein die Spannklinke (22, 22') durch einen einzigen Kraftspeicher (31) im Sperrsinne belastet ist,
der Fanghaken (18) in Sperrlage allein durch die Wirkverbindung über die Stützglieder (24, 26; 36, 37) gehalten wird und
wobei durch eine Nase (33) am Fanghaken (18), die in Wirkverbindung mit einer Anschlagwarze (34) des Beschlagteiles (13) steht, die Schwenkbewegung des Fanghakens (18) im Uhrzeigerdrehsinn eingeschränkt ist und der Fanghaken (18) **dadurch** in Bereitschaftslage zum Überfahren des Anschlages (15) gehalten wird.

2. Fanghaken nach Anspruch 1, **dadurch gekennzeichnet, dass** das insbesondere mit einem Zugglied (29) verbundene Betätigungsglied (28) mit einem Auslösezapfen (27) der Spannklinke (22) in Verbindung steht.

3. Fanghaken nach Anspruch 1 oder 2, **dadurch gekennzeichnet, dass** als Stützglieder neben einem Lagerzapfen (19) zur Lagerung der Spannklinke (22) am Fanghaken (18), die durch eine Aussparung (23) der Spannklinke (22) gebildeten und den Kopf (26) eines den Fanghaken (18) am Beschlagteil (13) lagernden Lagerzapfens (19) übergreifenden Stützfinger (24) wirksam sind.

4. Fanghaken nach Anspruch 3, **dadurch gekennzeichnet, dass** die Aussparung (23) den Kopf (26) des Lagerzapfens (19) mit Spiel umgreift, und die Stützfinger (24, 25) einen Abstand zum Umfang des Bolzenkopfes (26) aufweisen.

5. Fanghaken nach Anspruch 1 oder 2, **dadurch gekennzeichnet, dass** als Stützglieder neben einem Lagerzapfen (19) zur Lagerung der Spannklinke (22') am Fanghaken (18) der Auslösezapfen (27) mit einem Zapfenvorsprung (36) fungiert, der in ein Langloch (37) im Fanghaken (18) eingreift, das einen um den Lagerbolzen (21) äquidistant gekrümmten Verlauf aufweist.

## Claims

1. Catch hook for a backrest adjustment fitting for vehicle seats, which is rotatably mounted on a part (13) of the fitting, for releasably locking said fitting part (13) which can be pivoted forwards together with a part of the seat, said hook further abutting in the locked position on a stop (15) of a base frame of the seat, and being acted upon by a stored-energy device in the locking direction, and in the locked position the catch hook (18) engages with its opening (20) behind the stop (15), while alongside the catch hook (18) is arranged a tension latch (22, 22') which also engages behind the stop (15) in the locked position, said latch in turn being pivotably mounted on the catch hook (18) and if necessary being releasable from the locked position by means of an actuating element (28) and the tension latch (22, 22') being coupled to the catch hook (18) via support elements (24, 26; 36, 37) so that it can advance in the direction of movement,
**characterised in that**
only the tension latch (22, 22') is subjected to force from a single stored-energy device (31) in the locking direction,
the catch hook (18) is held in the locked position solely by the operative connection via the support elements (24, 26; 36, 37), and
the pivoting movement of the catch hook (18) in the clockwise direction is restricted by a lug (33) on the catch hook (18), which is operatively connected to a stop bump (34) on the fitting part (13), and the catch hook (18) is thereby held in a position of readiness for moving past the stop (15).

2. Catch hook according to claim 1, **characterised in that** the actuating element (28) connected in particular to a tension element (29) is connected to a release pin (27) of the tension latch (22).

3. Catch hook according to claim 1 or 2, **characterised in that** the support fingers (24), which are formed by an opening (23) in the tension latch (22) and which engage over the head (26) of an axle journal (19) supporting the catch hook (18) on the fitting part (13), act as support elements in addition to the axle journal (19) which supports the tension latch (22) on the catch hook (18).

4. Catch hook according to claim 3, **characterised in that** the opening (23) surrounds the head (26) of the axle journal (19) with play, and **in that** the support fingers (24, 25) are a certain spacing from the circumference of the head (26).

5. Catch hook according to claim 1 or 2, **characterised in that** acting as a support element, in addition to an axle journal (19) for supporting the tension latch (22') on the catch hook (18), is the release pin (27) with a projection (36) which engages in a slot (37) in the catch hook (18), said slot curving around the bearing shaft (21) and equidistant therefrom.

## Revendications

1. Crochet d'attache d'une armature de réglage du dossier pour des sièges de véhicule, maintenu pour un verrouillage désolidarisable de la partie d'armature (13) pouvant pivoter conjointement avec une partie d'assise et en appui en position de blocage sur une butée (15) d'un bâti inférieur de siège, le maintien se faisant par une articulation en rotation sur cette partie d'armature (13) et sollicité dans le sens du blocage au moyen d'un accumulateur de force, et le crochet d'attache (18), à la position de blocage, saisissant par l'arrière la butée (15) par son bec de crochet (20), au crochet d'attache (18) étant coordonné un cliquet de serrage (22, 22') saisissant également par l'arrière la butée (15) à la position de blocage, cliquet de serrage qui, de son côté, est monté à pivotement sur le crochet d'attache (18) lui-même et, en cas de besoin, est désolidarisable de la position de blocage au moyen d'un organe d'actionnement (28), et le cliquet de serrage (22, 22') étant couplé, avec anticipation dans le sens de déplacement, au crochet d'attache (18) par l'intermédiaire d'organes d'appui (24, 26 ; 36, 37),
**caractérisé en ce que**
seul le cliquet de serrage (22, 22') est sollicité dans le sens du blocage, par un unique accumulateur de force (31),
le crochet d'attache (18) est maintenu en position de blocage, rien que par la liaison fonctionnelle réalisée par l'intermédiaire des organes d'appui (24, 26 ; 36, 37), et
au moyen d'un ergot (33) sur le crochet d'attache (18), placé en liaison fonctionnelle avec un téton de butée (34) de la partie d'armature (13), le mouvement de pivotement du crochet d'attache (18) étant restreint dans le sens des aiguilles d'une montre et le crochet d'attache (18), de ce fait, est maintenu en position de disponibilité pour le franchissement de la butée (15).

2. Crochet d'attache selon la revendication 1, **caractérisé en ce que** l'organe d'actionnement (28), relié en particulier à un organe de traction (29), est relié à un téton de déclenchement (27) du cliquet de serrage (22).

3. Crochet d'attache selon la revendication 1 ou 2, **caractérisé en ce que**, à titre d'organes de soutien, outre un tourillon de palier (19) servant au tourillonne-ment du cliquet de serrage (22) sur le crochet d'attache (18), agissent les doigts d'appui (24), formés par un évidemment (23) du cliquet de serrage (22) et entourant la tête (26) d'un tourillon de palier (19), servant au montage en palier du crochet d'attache (18) sur la partie d'armature (13).

4. Crochet d'attache selon la revendication 3, **caractérisé en ce que** l'évidement (23) entoure avec du jeu la tête (26) du tourillon de palier (19), et les doigts d'appui (24, 25) présentent un espacement par rapport à la périphérie de la tête de boulon (26).

5. Crochet d'attache selon la revendication 1 ou 2, **caractérisé en ce qu'**est utilisé, à titre d'organes d'appui, outre un tourillon de palier (19) servant au montage en palier du cliquet de serrage (22') sur le crochet d'attache (18), le tourillon de déclenchement (27), muni d'une saillie de tourillon (36) qui s'engage dans un trou oblong (37) ménagé dans le crochet d'attache (18), présentant une allure incurvée, équidistante autour du boulon de palier (21).
